# EUROPEAN PATENT APPLICATION

(11) **EP 4 615 033 A1**
(43) Date of publication of application: **10.09.2025**
(21) Application number: 22968959.1
(22) Date of filing: 22.12.2022
(51) Int. Cl.: H04W 24/02

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: GUO, Boren, Dongguan, Guangdong 523860 (CN); GUO, Yali, Dongguan, Guangdong 523860 (CN)
(74) Representative: Taor, Simon Edward William
(86) International application number: PCT/CN2022/141158
(87) International publication number: WO 2024/130664

(57) **Abstract**

Provided are communication methods and communication apparatuses. The method comprises: a first network entity sending first information to a second network entity, the first information being used for requiring the second network entity to determine jitter information corresponding to a target traffic flow. The methods in the embodiments of the present disclosure are conducive to the optimization of a CDRX configuration.

## Description

### TECHNICAL FIELD

The disclosure relates to the technical field of communications, and more particularly, to a communication method, and a communication apparatus.

### BACKGROUND

In some communication systems, an access network device may perform connected mode discontinuous reception (CDRX) configuration based on jitter information corresponding to a traffic flow. However, it is currently unclear how to obtain the jitter information corresponding to the traffic flow.

### SUMMARY

Embodiments of the disclosure provide a communication method, and a communication apparatus. Various aspects involved in the embodiments of the disclosure are described below.

In a first aspect, a communication method is provided, including: sending first information by a first network entity to a second network entity, the first information being configured to request the second network entity to determine jitter information corresponding to a target traffic flow.

In a second aspect, a communication method is provided, including: receiving first information by a second network entity from a first network entity, the first information being configured to request the second network entity to determine jitter information corresponding to a target traffic flow; and determining the jitter information corresponding to the target traffic flow by the second network entity based on the first information.

In a third aspect, a communication method is provided, including: sending second information by a third network entity to a first network entity, the second information being configured to trigger the first network entity to send first information to a second network entity, and the first information being configured to request the second network entity to determine jitter information corresponding to a target traffic flow.

In a fourth aspect, a communication method is provided, including: receiving jitter information corresponding to a target traffic flow by a fourth network entity from a first network entity or a second network entity.

In a fifth aspect, a communication apparatus is provided, including: a sending unit, configured to send first information to a second network entity, the first information being configured to request the second network entity to determine jitter information corresponding to a target traffic flow.

In a sixth aspect, a communication apparatus is provided, including: a receiving unit, configured to: receive first information from a first network entity, the first information being configured to request the apparatus to determine jitter information corresponding to a target traffic flow; and a Determining, configured to determine the jitter information corresponding to the target traffic flow based on the first information.

In a seventh aspect, a communication apparatus is provided, including: a sending unit, configured to send second information to a first network entity, the second information being configured to trigger the first network entity to send first information to a second network entity, and the first information being configured to request the second network entity to determine jitter information corresponding to a target traffic flow.

In an eighth aspect, a communication apparatus is provided, including: a receiving unit, configured to receive jitter information corresponding to a target traffic flow from a first network entity or a second network entity.

In a ninth aspect, a communication device is provided, including a memory, a transceiver and a processor, the memory being configured to store a program, and the processor being configured to transmit and receive data through the transceiver, and configured to call the program from the memory to enable the communication device to perform the method of any one of the first to fourth aspects.

In a tenth aspect, a chip is provided, including a processor configured to call a program from a memory to enable a device installed with the chip to perform the method of any one of the first to fourth aspects.

In an eleventh aspect, there is provided a computer-readable storage medium having stored thereon a program that enables a computer to execute the method of any one of the first to fourth aspects.

In a twelfth aspect, there is provided a computer program product including a program that enables a computer to execute the method of any one of the first to fourth aspects.

In a thirteenth aspect, there is provided a computer program enabling a computer to execute the method of any one of the first to fourth aspects.

In the embodiments of the disclosure, a first network entity may send first information to a second network entity. The first information is configured to request the second network entity to determine jitter information corresponding to a target traffic flow. In this way, the second network entity can determine the jitter information corresponding to the target traffic flow based on the first information, facilitating an access network device optimizing CDRX configuration based on the jitter information corresponding to the target traffic flow.

### BRIEF DESCRIPTION OF THE DRAWINGS

FIG. 1 illustrates an example diagram of a wireless communication system to which the embodiments of the disclosure are applied.
FIG. 2 illustrates an example diagram of a 5^{th} generation system (5GS) architecture according to an embodiment of the disclosure.
FIG. 3 illustrates a schematic flowchart of a communication method according to an embodiment of the disclosure.
FIG. 4 illustrates a schematic flowchart of a communication method according to another embodiment of the disclosure.
FIG. 5 illustrates a schematic flowchart of a communication method according to yet another embodiment of the disclosure.
FIG. 6 illustrates a schematic flowchart of a communication method according to yet another embodiment of the disclosure.
FIG. 7 illustrates a schematic flowchart of a communication method according to yet another embodiment of the disclosure.
FIG. 8 illustrates a schematic structural diagram of a communication apparatus according to an embodiment of the disclosure.
FIG. 9 illustrates a schematic structural diagram of a communication apparatus according to another embodiment of the disclosure.
FIG. 10 illustrates a schematic structural diagram of a communication apparatus according to yet another embodiment of the disclosure.
FIG. 11 illustrates a schematic structural diagram of a communication apparatus according to yet another embodiment of the disclosure.
FIG. 12 illustrates a schematic structural diagram of a device according to an embodiment of the disclosure.

### DETAILED DESCRIPTION

Technical solutions of the disclosure will be described below in conjunction with drawings.

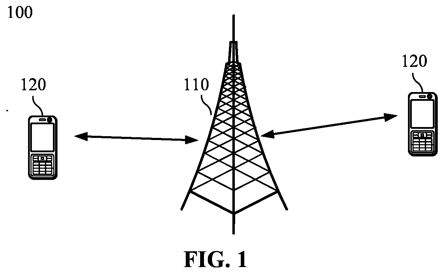

FIG. 1 illustrates a wireless communication system 100 to which the embodiments of the disclosure are applied. The wireless communication system 100 includes a network device 110 and user equipment (UE) 120. The network device 110 may communicate with the UE 120. The network device 110 may provide communication coverage for a specific geographical area, and may communicate with the UE 120 within the coverage. The UE 120 may access a network (such as a wireless network) through the network device 110.

FIG. 1 exemplarily illustrates one network device and two UEs. Optionally, the wireless communication system 100 may include multiple network devices, and there may be another number of terminal devices within the coverage of each network device, which is not limited in the embodiments of the disclosure. Optionally, the wireless communication system 100 may further include other network entities such as a network controller and a mobility management entity, which is not limited in the embodiments of the disclosure.

It is to be understood that the technical solutions of the embodiments of the disclosure may be applied to various communication systems, such as a 5^{th} generation (5G) system or a new radio (NR) system, a long term evolution (LTE) system, an LTE frequency division duplex (FDD) system, an LTE time division duplex (TDD), and the like. The technical solutions provided in the disclosure may also be applied to future communication systems, such as a 6th generation mobile communication system, a satellite communication system, and the like.

The UE in the embodiments of the disclosure may also be referred to as a terminal device, an access terminal, a subscriber unit, a subscriber station, a mobile station (MS), a mobile terminal (MT), a remote station, a remote terminal, a mobile device, a user terminal, a terminal, a wireless communication device, a subscriber agent or a user device. The UE in the embodiments of the disclosure may be a device that provides voice and/or data connectivity to a user, and may be used to connect people, objects, and machines, for example a handheld device or a vehicle-mounted device having a wireless connection function. In the embodiments of the disclosure, the UE may be a mobile phone, a pad, a notebook, a palm top, a mobile Internet device (MID), a wearable device, a virtual reality (VR) device, an augmented reality (AR) device, a radio terminal used in industrial control, a radio terminal used in self driving, a radio terminal used in remote medical surgery, a radio terminal used in smart grid, a radio terminal used in transportation safety, a radio terminal used in smart city, a radio terminal used in smart home, or the like. Optionally, the UE may act as a base station. For example, the UE may act as a scheduling entity that provides sidelink signals between devices such as vehicle-to-everything (V2X) UE or device-to-device (D2D) UE. For example, a cellular phone and an automobile communicate with each other using sidelink signals. Communication between a cellular phone and smart home devices may occur without communication signals being relayed through a base station.

The network device in the embodiments of the disclosure may be a device for communicating with UE, and the network device may also be referred to as an access network device or a radio access network device, for example, the network device may be a base station. The network device in the embodiments of the disclosure may refer to a radio access network (RAN) node (or device) that connects the UE to the wireless network. A base station may broadly cover or be substituted by following names: a Node B (NodeB), an evolved NodeB (eNB), a next generation NodeB (gNB), a relay station, an access point, a transmitting and receiving point (TRP), a transmitting point (TP), a main eNB (MeNB), a secondary eNB (SeNB), a multi-standard radio (MSR) node, a home base station, a network controller, an access node, a wireless node, an access point (AP), a transmission node, a transceiver node, a base band unit (BBU), a Remote Radio Unit (RRU), an active antenna unit (AAU), a remote radio head (RRH), a central unit (CU), a distributed unit (DU), a positioning node, etc. The base station may be a macro base station, a micro base station, a relay node, a donor node or the like, or a combination thereof.

In some embodiments, the network device may be stationary or mobile. For example, a helicopter or drone may be configured to act as a mobile network device, and one or more cells may move according to the location of the mobile network device. In other examples, a helicopter or drone may be configured to be used as a device to communicate with another network device. In some embodiments, the network device may refer to a centralized unit (CU) or a distributed unit (DU), or the network device may include a CU and a DU, or the network device may further include an AAU.

It is to be understood that the network device may be deployed on the land, including being indoor or outdoor, hand-held, or vehicle-mounted; or the network device may be deployed on the water; or may be deployed in the air, for example on a plane, a balloon, and a satellite. In the embodiments of the disclosure, the network device and the scenario in which the network device is located are not limited.

It is also to be understood that all or part of the functionality of the network device and UE in the disclosure may also be implemented by software functionality running on hardware, or by virtual functionality instantiated on a platform, such as a cloud platform.

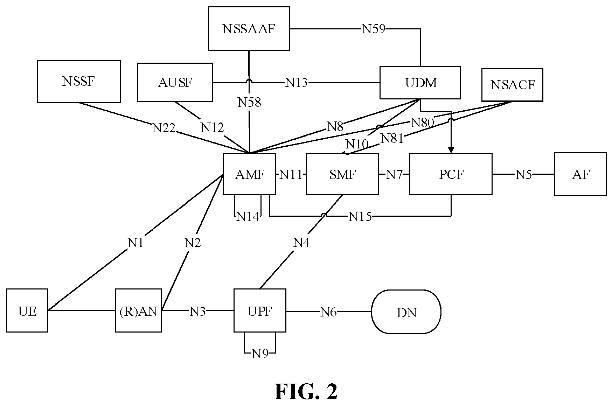

Hereinafter, a system architecture according to the embodiments of the disclosure will be described in conjunction with FIG. 2.

FIG. 2 illustrates a diagram of a 5^{th} generation system (5GS) architecture, which includes: a network slice specific authentication and authorization function (NSSAAF), a network slice selection function (NSSF), an authentication server function (AUSF), unified data management (UDM), a network slice admission control function (NSACF), an access and mobility management function (AMF), a session management function (SMF), a policy control function (PCF), an application function (AF), UE, an access network element, a user plane function (UPF), a data network (DN), and the like.

The terminal device/UE, the access network element, a control plane network element (such as a PCF and an SMF), a user plane network element (such as a UPF) and an application server (AS) are involved in the embodiments of the disclosure. The DN may implement some user-plane functions of the application server, and the AF may implement some control-plane functions of the application server. Optionally, the access network element may be the network device 110 in FIG. 1, and the terminal device may be the terminal device 120 in FIG. 1.

An extended reality multimedia (XRM) traffic flow has a periodicity. For example, a server may send video frames of an XRM service at a certain frame rate. An access network device (such as a random access network (RAN) or a next generation radio access network (NG-RAN)) can optimize connected mode discontinuous reception (CDRX) configuration according to a periodicity of a traffic flow to achieve device node management. However, due to factors such as multi-path routes and coding complexity between the server and a core network element (such as a 5G core network (5GC) element), the video frames of the XRM service may not arrive at the access network device according to a predetermined periodicity. Therefore, while providing the periodicity of the traffic flow to the access network device, N6 jitter information (for example, jitter information between the data network (DN) and the user plane function (UPF)) corresponding to the periodicity of the traffic flow also needs to be provided to the access network device, so as to assist the access network device in optimizing the CDRX configuration.

It is only proposed in existing specifications that a session management function (SMF) requests a user plane function (UPF) to acquire an N6 jitter range corresponding to a given periodicity, and the 5GC derives jitter information accordingly and forwards the jitter information to an access network device together with periodicity information. However, it is currently unclear how to obtain the jitter information corresponding to the traffic flow. For example, it is unclear when the SMF requests the N6 jitter range corresponding to the given periodicity, which information is sent by the SMF to assist the UPF to determine a target traffic flow needing to be detected, and how the UPF forwards the N6 jitter range to the access network device after detecting the N6 jitter range.

In order to solve one or more of the above-described technical problems, communication methods and communication apparatuses are proposed in the disclosure.

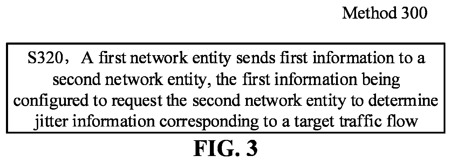

The embodiments of the disclosure will be described hereinafter in detail by way of example in conjunction with FIG. 3 to FIG. 7.

FIG. 3 illustrates a schematic flowchart of a communication method according to an embodiment of the disclosure. The method 300 illustrated in FIG. 3 may include an operation S320 as below specifically.

At S320, a first network entity sends first information to a second network entity.

The first network entity may be a session management function (SMF), and the second network entity may be a user plane function (UPF).

Optionally, the first information may be configured to request the second network entity to determine jitter information corresponding to a target traffic flow. The jitter information may include at least one of: a jitter range, a jigger average value, and a jitter variance.

Optionally, the jitter information corresponding to the target traffic flow may be N6 jitter information, such as jitter information of the target traffic flow between the UPF and a data network (DN).

Optionally, the first information may include at least one of: a jitter information acquisition instruction, periodicity information of the target traffic flow, and flow description information of the target traffic flow.

Optionally, the periodicity information of the target traffic flow may be a periodicity of data burst of the target traffic flow.

Optionally, the flow description information of the target traffic flow may include at least one of: packet filtering information of an Internet protocol (IP) quintuple, an application identifier corresponding to the target traffic flow, an identifier (ID) of target user equipment (UE) corresponding to the target traffic flow, an address of the target UE, and header information of a data packet corresponding to the target traffic flow. The packet filtering information of the IP quintuple may include a source address, a source port number, a destination address, a destination port number, and a supported protocol identifier (ID).

In the embodiments of the disclosure, a first network entity sends first information to a second network entity. The first information is configured to request the second network entity to determine jitter information corresponding to a target traffic flow. In this way, the second network entity can determine the jitter information corresponding to the target traffic flow based on the first information, facilitating an access network device optimizing CDRX configuration based on the jitter information corresponding to the target traffic flow.

In some embodiments, before the operation S320, the method 300 may further include an operation S310 as below specifically.

At S310, a third network entity sends second information to the first network entity.

Optionally, the second information may be configured to trigger the first network entity to send the first information. Optionally, the second information may include at least one of: a jitter information acquisition instruction, periodicity information of the target traffic flow, and flow description information of the target traffic flow. The jitter information acquisition instruction may instruct the first network entity to send the first information.

The second information may explicitly or implicitly trigger the first network entity to send the first information. For example, when the first information includes the jitter information acquisition instruction, it means that the second information explicitly triggers the first network entity to send the first information; when the first information includes the periodicity information of the target traffic flow and/or the flow description information of the target traffic flow, it means that the second information implicitly triggers the first network entity to send the first information.

Optionally, the third network entity may be an application function (AF). Optionally, the third network entity may send the second information to the first network entity through a policy control function (PCF). It is to be noted that, the AF may be a trusted AF or an untrusted AF. When the third network entity is a trusted AF, the second information may be sent to the PCF directly, then the PCF forwards the second information to the first network entity. When the third network entity is an untrusted AF, the second information may be sent to the PCF through a network exposure function (NEF), and then the PCF forwards the second information to the first network entity.

Optionally, the third network entity may be an access network device, such as an RAN or an NG-RAN. Optionally, the third network entity may send the second information to the first network entity through an access and mobility management function (AMF).

In some embodiments, after the operation S320, the method 300 may further include an operation S330 as below specifically.

At S330, the second network entity determines the jitter information corresponding to the target traffic flow based on the first information.

For example, the second network entity may determine the target traffic flow according to the periodicity information of the target traffic flow or the flow description information of the target traffic flow, and obtain N6 jitter information corresponding to the target traffic flow based on implementation of the second network entity itself.

In some embodiments, after the operation S320, the method 300 may further include an operation S340 as below specifically.

At S340, the second network entity sends third information to the first network entity.

Optionally, the third information may include the jitter information corresponding to the target traffic flow. Optionally, the third information may further include the periodicity information of the target traffic flow and/or the flow description information of the target traffic flow.

In some embodiments, after the operation S320, the method 300 may further include an operation S350 as below specifically.

At S350, the first network entity sends fourth information to a fourth network entity.

Optionally, the fourth information may include the jitter information corresponding to the target traffic flow. Optionally, the fourth information may further include the periodicity information of the target traffic flow and/or the flow description information of the target traffic flow.

Optionally, the fourth network entity may be an access network device. Optionally, after receiving the third information from the second network entity, the first network entity may send fourth information to the fourth network entity through an access and mobility management function (AMF).

In some embodiments, after the operation S320, the method 300 may further include an operation S350 as below specifically.

At S350, the second network entity sends fifth information to the fourth network entity.

Optionally, the fifth information may include the jitter information corresponding to the target traffic flow. Optionally, the fifth information may further include the periodicity information of the target traffic flow and/or the flow description information of the target traffic flow.

Optionally, the fourth network entity may be an access network device, such as an RAN or an NG-RAN. Optionally, the second network entity may send the fifth information to the fourth network entity through a user plane. For example, the fourth network entity may add the fifth information to a user plane part of general packet radio service (GPRS) tunnel protocol (GTP-U) header of a data packet (corresponding to the target traffic flow), and send the data packet to the fourth network entity. Correspondingly, the fourth network entity may read the GTP-U header of the data packet to obtain the fifth information.

Further, the fourth network entity may optimize the CDRX configuration based on the jitter information corresponding to the target traffic flow.

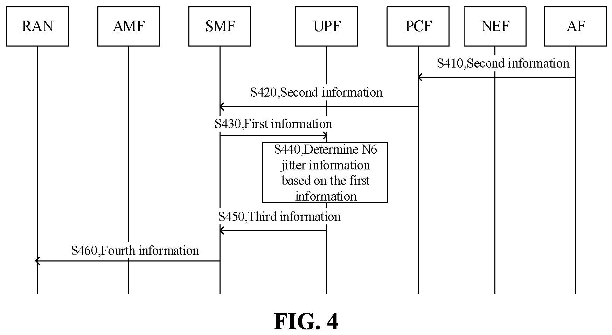

Hereinafter, the above embodiment will be further described in detail in conjunction with FIG. 4 to FIG. 7.

FIG. 4 illustrates a schematic flowchart of a communication method according to an embodiment of the disclosure. In the method 400 illustrated in FIG. 4, a session management function (SMF) may request, based on instruction information from an application function (AF), a user plane function (UPF) to acquire an N6 jitter range related to a given periodicity of a traffic flow, and forward the jitter information to an RAN through a control plane. The method 400 may include operations S410 to S460 as below specifically.

At S410, the AF sends second information to a policy control function (PCF) through a network exposure function (NEF).

The second information may include a jitter information acquisition instruction, periodicity information of a target traffic flow, and/or flow description information of the target traffic flow. The flow description information of the target traffic flow may include: packet filtering information of an Internet protocol (IP) quintuple (a source address, a source port number, a destination address, a destination port number, and a supported protocol identifier (ID)), an application identifier corresponding to the target traffic flow, an identifier (ID) of target user equipment (UE), an address of the target UE, and/or application-layer header information of a data packet corresponding to the target traffic flow.

At S420, the PCF forwards the second information to the SMF.

At S430, the SMF sends first information to the UPF.

The first information may be configured to request the second network entity to determine N6 jitter information corresponding to the target traffic flow. Optionally, the first information may include a jitter information acquisition instruction, periodicity information of the target traffic flow, and/or flow description information of the target traffic flow.

At S440, the UPF determines the N6 jitter information corresponding to the target traffic flow based on the first information.

The UPF may determine the target traffic flow according to the periodicity information of the target traffic flow or the flow description information of the target traffic flow, and obtain N6 jitter information corresponding to the target traffic flow based on implementation of the UPF itself. The N6 jitter information may include a jitter range, a jigger average value, a jitter variance and so on.

At S450, the UPF sends third information to the SMF.

The third information may include the N6 jitter information corresponding to the target traffic flow, the periodicity information of the target traffic flow, and the flow description information of the target traffic flow.

At S460, the SMF sends fourth information to the RAN.

The SMF may send the fourth information to the fourth network entity through an access and mobility management function (AMF). The fourth information may include the N6 jitter information corresponding to the target traffic flow, the periodicity information of the target traffic flow, and the flow description information of the target traffic flow.

Further, the RAN may optimize the CDRX configuration based on the jitter information corresponding to the target traffic flow.

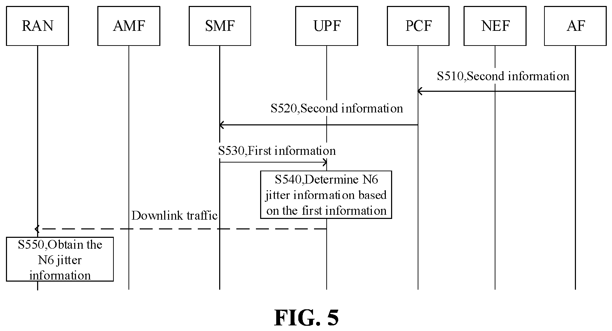

FIG. 5 illustrates a schematic flowchart of a communication method according to an embodiment of the disclosure. In the method 500 illustrated in FIG. 5, a session management function (SMF) may request, based on instruction information from an application function (AF), a user plane function (UPF) to acquire an N6 jitter range related to a given periodicity of a traffic flow, and forward the jitter information to an RAN through a user plane. The method 500 may include operations S510 to S550 as below specifically.

At S510, the AF sends second information to a policy control function (PCF) through a network exposure function (NEF).

The second information may include a jitter information acquisition instruction, periodicity information of a target traffic flow, and/or flow description information of the target traffic flow. The flow description information may include: packet filtering information of an Internet protocol (IP) quintuple (a source address, a source port number, a destination address, a destination port number, and a supported protocol identifier (ID)), an application identifier corresponding to the target traffic flow, an identifier (ID) of target user equipment (UE), an address of the target UE, application-layer header information of a data packet corresponding to the target traffic flow, and so on.

At S520, the PCF forwards the second information to the SMF.

At S530, the SMF sends first information to the UPF.

The first information may be configured to request the second network entity to determine N6 jitter information corresponding to the target traffic flow. Optionally, the first information may include a jitter information acquisition instruction, periodicity information of the target traffic flow, and/or flow description information of the target traffic flow.

At S540, the UPF determines the N6 jitter information corresponding to the target traffic flow based on the first information.

The UPF may determine the target traffic flow according to the periodicity information of the target traffic flow or the flow description information of the target traffic flow, and obtain N6 jitter information corresponding to the target traffic flow based on implementation of the UPF itself. The N6 jitter information may include a jitter range, a jigger average value, a jitter variance, and so on.

The UPF may add the obtained N6 jitter information to the GTP-U header of the data packet, and forward the data packet to the RAN through the user plane (in downlink (DL) traffic).

At S550, the RAN obtains the N6 jitter information corresponding to the target traffic flow.

The RAN may read the GTP-U header of the data packet to obtain the N6 jitter information, and optimize the CDRX configuration in conjunction with the periodicity information of the target traffic flow. The periodicity information of the target traffic flow may be transmitted to the RAN by the control plane, or may be added to the GTP-U header and transmitted to the RAN by the user plane.

Further, the RAN may optimize the CDRX configuration based on the jitter information corresponding to the target traffic flow.

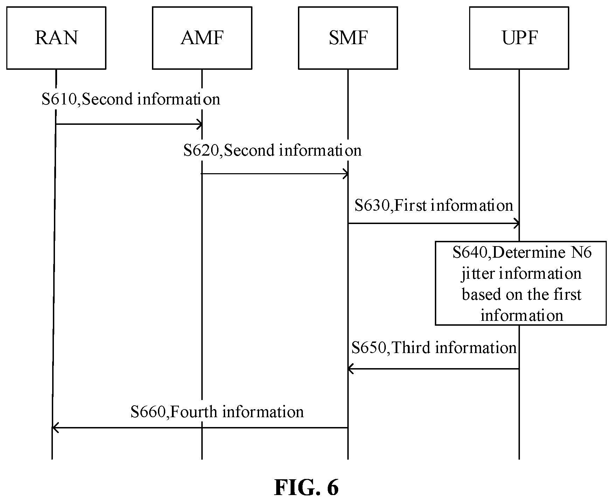

FIG. 6 illustrates a schematic flowchart of a communication method according to an embodiment of the disclosure. In the method 600 illustrated in FIG. 6, a session management function (SMF) may request, based on instruction information from a random access network (RAN), a user plane function (UPF) to acquire an N6 jitter range related to a given periodicity of a traffic flow, and forward the jitter information to the RAN through a control plane. The method 600 may include operations S610 to S660 as below specifically.

At S610, the RAN sends second information to an access and mobility management function (AMF).

The second information may include a jitter information acquisition instruction, periodicity information of a target traffic flow, and/or flow description information of the target traffic flow. The flow description information may include: packet filtering information of an Internet protocol (IP) quintuple (a source address, a source port number, a destination address, a destination port number, and a supported protocol identifier (ID)), an application identifier corresponding to the target traffic flow, an identifier (ID) of target user equipment (UE), an address of the target UE, and application-layer header information of a data packet corresponding to the target traffic flow.

At S620, the AMF forwards the second information to the SMF.

At S630, the SMF sends first information to the UPF.

The first information may be configured to request the second network entity to determine N6 jitter information corresponding to the target traffic flow. Optionally, the first information may include a jitter information acquisition instruction, periodicity information of the target traffic flow, and/or flow description information of the target traffic flow.

At S640, the UPF determines the N6 jitter information corresponding to the target traffic flow based on the first information.

The UPF may determine the target traffic flow according to the periodicity information of the target traffic flow or the flow description information of the target traffic flow, and obtain N6 jitter information corresponding to the target traffic flow based on implementation of the UPF itself. The N6 jitter information may include a jitter range, a jigger average value, a jitter variance, and so on.

At S650, the UPF sends third information to the SMF.

The third information may include the N6 jitter information corresponding to the target traffic flow, the periodicity information of the target traffic flow, and the flow description information of the target traffic flow.

At S660, the SMF sends fourth information to the RAN.

The SMF may send the fourth information to the fourth network entity through an access and mobility management function (AMF). The fourth information may include the N6 jitter information corresponding to the target traffic flow, the periodicity information of the target traffic flow, and the flow description information of the target traffic flow.

Further, the RAN may optimize the CDRX configuration based on the jitter information corresponding to the target traffic flow.

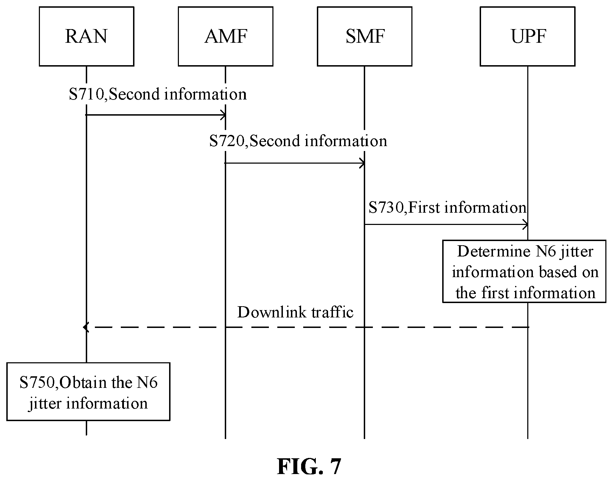

FIG. 7 illustrates a schematic flowchart of a communication method according to an embodiment of the disclosure. In the method 700 illustrated in FIG. 7, a session management function (SMF) may request, based on instruction information from an RAN, a user plane function (UPF) to acquire an N6 jitter range related to a given periodicity of a traffic flow, and forward the jitter information to the RAN through a user plane. The method 700 may include operations S710 to S750 as below specifically.

At S710, the RAN sends second information to the AMF.

The second information may include a jitter information acquisition instruction, periodicity information of a target traffic flow, and/or flow description information of the target traffic flow. The flow description information may include: packet filtering information of an Internet protocol (IP) quintuple (a source address, a source port number, a destination address, a destination port number, and a supported protocol identifier (ID)), an application identifier corresponding to the target traffic flow, an identifier (ID) of target user equipment (UE), an address of the target UE, and application-layer header information of a data packet corresponding to the target traffic flow.

At S720, the AMF forwards the second information to the SMF.

At S730, the SMF sends first information to the UPF.

The first information may be configured to request the second network entity to determine N6 jitter information corresponding to the target traffic flow. Optionally, the first information may include a jitter information acquisition instruction, periodicity information of the target traffic flow, and/or flow description information of the target traffic flow.

At S740, the UPF determines the N6 jitter information corresponding to the target traffic flow based on the first information.

The UPF may determine the target traffic flow according to the periodicity information of the target traffic flow or the flow description information of the target traffic flow, and obtain N6 jitter information corresponding to the target traffic flow based on implementation of the UPF itself. The N6 jitter information may include a jitter range, a jigger average value, a jitter variance, and so on.

The UPF may add the obtained N6 jitter information to the GTP-U header of the data packet, and forward the data packet to the RAN through the user plane (in downlink (DL) traffic).

At S750, the RAN obtains the N6 jitter information corresponding to the target traffic flow.

The RAN may read the GTP-U header of the data packet to obtain the N6 jitter information, and optimize the CDRX configuration in conjunction with the periodicity information of the target traffic flow. The periodicity information of the target traffic flow may be transmitted to the RAN by the control plane, or may be added to the GTP-U header and transmitted to the RAN by the user plane.

Further, the RAN may optimize the CDRX configuration based on the jitter information corresponding to the target traffic flow.

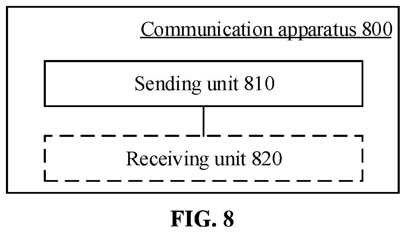

The method embodiments of the disclosure have been described in detail above in conjunction with FIG. 1 to FIG. 7. The device embodiment of the disclosure is described in detail in conjunction with FIG. 8 to FIG. 12. It is to be understood that the description of the method embodiment corresponds to the description of the method embodiment; therefore, part of the device embodiment that is not detailed may refer to the previous method embodiment.

FIG. 8 illustrates a schematic structural diagram of a communication apparatus according to an embodiment of the disclosure. As illustrated in FIG. 8, the apparatus 800 includes a sending unit 810 as below specifically.

The sending unit 810 is configured to send first information to a second network entity. The first information is configured to request the second network entity to determine jitter information corresponding to a target traffic flow.

Optionally, the first information may include at least one of: a jitter information acquisition instruction, periodicity information of the target traffic flow, and flow description information of the target traffic flow.

Optionally, the apparatus 800 may further include a receiving unit 820. Before sending the first information to the second network entity, the receiving unit is configured to receive second information from a third network entity. The second information is configured to trigger the apparatus to send the first information.

Optionally, the second information may include at least one of: a jitter information acquisition instruction, periodicity information of the target traffic flow, and flow description information of the target traffic flow.

Optionally, the third network entity may be an application function (AF), and the receiving unit may be specifically configured to: receive the second information that is transmitted through a policy control function (PCF) from the third network entity.

Optionally, the third network entity may be an access network device, and the receiving unit 820 may be specifically configured to: receive the second information that is transmitted through an access and mobility management function (AMF) from the third network entity.

Optionally, the apparatus 800 may further include a receiving unit 820. The receiving unit 820 is configured to receive third information from the second network entity. The third information may include the jitter information corresponding to the target traffic flow.

Optionally, the third information may further include periodicity information of the target traffic flow and/or flow description information of the target traffic flow.

Optionally, the sending unit 810 may be further configured to send fourth information to a fourth network entity. The fourth information may include the jitter information corresponding to the target traffic flow.

Optionally, the fourth network entity may be an access network device, and the sending unit 810 may be specifically configured to: send the fourth information to the fourth network entity through an access and mobility management function (AMF).

Optionally, the access network device may be a radio access network (RAN) or a next-generation radio access network (NG-RAN).

Optionally, the fourth information may further include periodicity information of the target traffic flow and/or flow description information of the target traffic flow.

Optionally, the periodicity information of the target traffic flow may be a periodicity of data burst of the target traffic flow.

Optionally, the flow description information may include at least one of: packet filtering information of an Internet protocol (IP) quintuple, an application identifier corresponding to the target traffic flow, an identifier of target user equipment (UE) corresponding to the target traffic flow, an address of the target UE, and header information of a data packet corresponding to the target traffic flow.

Optionally, the jitter information may be N6 jitter information.

Optionally, the N6 jitter information may be jitter information of the target traffic flow between a user plane function (UPF) and a data network (DN).

Optionally, the jitter information may include at least one of: a jitter range, a jigger average value, and a jitter variance.

Optionally, the apparatus may be a session management function (SMF), and the second network entity may be a user plane function (UPF).

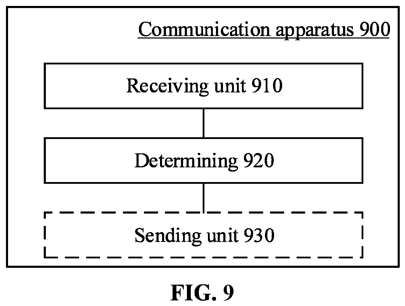

FIG. 9 illustrates a schematic structural diagram of a communication apparatus according to an embodiment of the disclosure. The apparatus 900 for communication illustrated in FIG. 9 includes a receiving unit 910 and a Determining 920 as blow specifically.

The receiving unit 910 is configured to receive first information from a first network entity. The first information is configured to request the apparatus to determine jitter information corresponding to a target traffic flow.

The determining 920 is configured to determine the jitter information corresponding to the target traffic flow based on the first information.

Optionally, the first information may include at least one of: a jitter information acquisition instruction, periodicity information of the target traffic flow, and flow description information of the target traffic flow.

Optionally, the apparatus 900 may further include a sending unit 930. The sending unit 930 is configured to: send third information to the first network entity. The third information includes the jitter information corresponding to the target traffic flow.

Optionally, the third information may further include periodicity information of the target traffic flow and/or flow description information of the target traffic flow.

Optionally, the apparatus 900 may further include a sending unit 930. The sending unit 930 is configured to: send fifth information to a fourth network entity. The fifth information may include the jitter information corresponding to the target traffic flow.

Optionally, the fourth network entity may be an access network device, and the sending unit 930 may be specifically configured to: send the fifth information to the fourth network entity through a user plane.

Optionally, the access network device may be a radio access network (RAN) or a next-generation radio access network (NG-RAN).

Optionally, the fifth information may further include periodicity information of the target traffic flow and/or flow description information of the target traffic flow.

Optionally, the periodicity information of the target traffic flow may be a periodicity of data burst of the target traffic flow.

Optionally, the flow description information may include at least one of: packet filtering information of an Internet protocol (IP) quintuple, an application identifier corresponding to the target traffic flow, an identifier of target user equipment (UE) corresponding to the target traffic flow, an address of the target UE, and header information of a data packet corresponding to the target traffic flow.

Optionally, the jitter information may be N6 jitter information.

Optionally, the N6 jitter information may be jitter information of the target traffic flow between a user plane function (UPF) and a data network (DN).

Optionally, the jitter information may include at least one of: a jitter range, a jigger average value, and a jitter variance.

Optionally, the first network entity may be a session management function (SMF), and the apparatus is a user plane function (UPF).

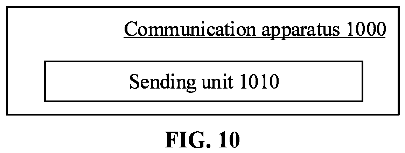

FIG. 10 illustrates a schematic structural diagram of a communication apparatus according to an embodiment of the disclosure. The apparatus 1000 for communication illustrated in FIG. 10 includes a sending unit 1010 as below specifically.

The a sending unit 1010 is configured to send second information to a first network entity. The second information is configured to trigger the first network entity to send first information to a second network entity, and the first information is configured to request the second network entity to determine jitter information corresponding to a target traffic flow.

Optionally, the second information may include at least one of: a jitter information acquisition instruction, periodicity information of the target traffic flow, and flow description information of the target traffic flow.

Optionally, the periodicity information of the target traffic flow may be a periodicity of data burst of the target traffic flow.

Optionally, the flow description information may include at least one of: packet filtering information of an Internet protocol (IP) quintuple, an application identifier corresponding to the target traffic flow, an identifier of target user equipment (UE) corresponding to the target traffic flow, an address of the target UE, and header information of a data packet corresponding to the target traffic flow.

Optionally, the apparatus may be an application function (AF), and the sending unit 1010 may be specifically configured to: send the second information to the first network entity through a policy control function (PCF).

Optionally, the apparatus may be an access network device, and the sending unit 1010 may be specifically configured to: send the second information to the first network entity through an access and mobility management function (AMF).

Optionally, the access network device may be a radio access network (RAN) or a next-generation radio access network (NG-RAN).

Optionally, the first network entity may be a session management function (SMF), and the second network entity may be a user plane function (UPF).

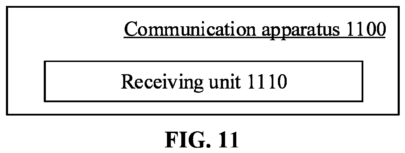

FIG. 11 illustrates a schematic structural diagram of a communication apparatus according to an embodiment of the disclosure. The apparatus 1100 for communication illustrated in FIG. 11 includes a receiving unit 1110 as below specifically.

The receiving unit 1110 is configured to receive jitter information corresponding to a target traffic flow from a first network entity or a second network entity.

Optionally, the receiving unit 1110 may be configured to receive fourth information that is transmitted through an access and mobility management function (AMF) from the first network entity. The fourth information may include the jitter information corresponding to the target traffic flow.

Optionally, the fourth information may further include periodicity information of the target traffic flow and/or flow description information of the target traffic flow.

Optionally, the receiving unit 1110 may be specifically configured to: receive fifth information that is transmitted through a user plane from the second network entity. The fifth information may include the jitter information corresponding to the target traffic flow.

Optionally, the fifth information may further include periodicity information of the target traffic flow and/or flow description information of the target traffic flow.

Optionally, the periodicity information of the target traffic flow may be a periodicity of data burst of the target traffic flow.

Optionally, the flow description information may include at least one of: packet filtering information of an Internet protocol (IP) quintuple, an application identifier corresponding to the target traffic flow, an identifier of target user equipment (UE) corresponding to the target traffic flow, an address of the target UE, and header information of a data packet corresponding to the target traffic flow.

Optionally, the jitter information may be N6 jitter information.

Optionally, the N6 jitter information may be jitter information of the target traffic flow between a user plane function (UPF) and a data network (DN).

Optionally, the jitter information may include at least one of: a jitter range, a jigger average value, and a jitter variance.

Optionally, the first network entity may be a session management function (SMF), the second network entity may be a user plane function (UPF), and the apparatus may be a radio access network (RAN) or a next-generation radio access network (NG-RAN).

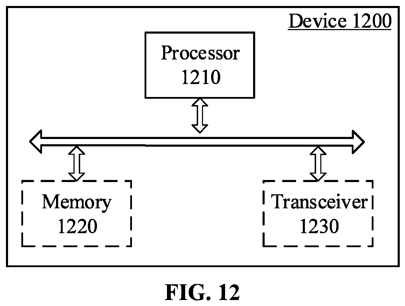

FIG. 12 illustrates a schematic structural diagram of a device according to an embodiment of the disclosure. The dashed lines in FIG. 12 indicate that the units or modules are optional. The device 1200 may be used to implement the methods described in the above method embodiments. The device 1200 may be a chip or a communication device.

The device 1200 may include one or more processors 1210. The processor 1210 may support the device 1200 to implement the methods described in the above method embodiments. The processor 1210 may be a universal processor or a special-purpose processor. For example, the processor may be a central processing unit (CPU). Alternatively, the processor may also be such as a general-purpose processor, a digital signal processor (DSP), an application specific integrated circuit (ASIC), a field programmable gate array (FPGA) or another programmable logical device, a discrete gate or a transistor logical device, or a discrete hardware component. The universal processor may be a microprocessor or the processor may also be any conventional processor and the like.

The device 1200 may further include one or more memories 1220. The memory 1210 has stored thereon a program that may be executed by the processor 1210 to enable the processor 1010 to implement the methods described in the above method embodiments. The memory 1220 may be a device independent from the processor 1210, or may be integrated in the processor 1210.

The device 1200 may further include a transceiver 1230. The processor 1210 may communicate with another device or chip through the transceiver 1230. For example, the processor 1210 may transmit and receive data with another device or chip through the transceiver 1230.

Embodiments of the disclosure may further provide a computer-readable storage medium for storing a program. The computer-readable storage medium may be applied to the communication apparatuses according to the embodiments of the disclosure, and the program enables a computer to implement the methods that are implemented by the communication apparatuses in various embodiments of the disclosure.

Embodiments of the disclosure may further provide a computer program product. The computer program product includes a program. The computer program product may be applied to the communication apparatuses according to the embodiments of the disclosure, and the program enables a computer to implement the methods that are implemented by the communication apparatuses in various embodiments of the disclosure.

Embodiments of the disclosure may further provide a computer program. The computer program may be applied to the communication apparatuses according to the embodiments of the disclosure, and the computer program enables a computer to implement the methods that are implemented by the communication apparatuses in various embodiments of the disclosure.

It is to be understood that in the embodiments of the disclosure, "B corresponding to A" means that B is associated with A, and B may be determined based on A. However, it is also be understood that determining B based on A does not mean that B is determined based on A alone, but B may also be determined from A and/or other information.

It is to be understood that the term "and/or" herein merely describes a relation between associated objects, representing that three relations may exist. For example A and/or B may represent following three cases: existence of A alone, existence of both A and B, and existence of B alone. The character "/" generally indicates that the contextual objects are in an "or" relationship.

It is to be understood that, in the embodiments of the disclosure, the sizes of the serial numbers of the above operations do not imply the sequential order in which the operations are performed, and shall not construe any limitation to the implementation of the embodiments of the disclosure. The order in which the operations are performed should be decided by their functions and internal logics.

In some embodiments provided in the disclosure, it is to be understood that the disclosed system, device and method may be implemented in other ways. For example, the device embodiment described above is only exemplary, and for example, division of the units is only division in logic functions, and division may be made in other ways during practical implementation. For example, multiple units or components may be combined or integrated into another system, or some features may be neglected or not executed. In addition, coupling or direct coupling or communication connection between various displayed or discussed components may be indirect coupling or communication connection, implemented through some interfaces, devices or units, and may be electrical and mechanical or in other forms.

The units described as separate components may or may not be physically discrete from one another. Components displayed as units may or may not be physical units, and can be located at the same place or may be distributed to multiple network units. Some or all of the units may be chosen to realize the purpose of the solution of the embodiments according to actual requirements.

Additionally, various functional units in the embodiments of the disclosure may be integrated in one processing unit, or may exist separately physically; or two or more units may be integrated in one unit.

The above embodiments may be implemented by software, hardware, firmware or any combination thereof completely or in part. When software is used, the embodiments may be implemented in form of a computer program product completely or in part. The computer program product includes one or more computer instructions. The computer program instructions, when loaded and executed by a computer, produce the procedures or functions according to the embodiments of the disclosure completely or in part. The computer may be a universal computer, a dedicated computer, a computer network, or other programmable devices. The computer instructions may be stored in a computer-readable storage medium, or may be transmitted from a computer-readable storage medium to another computer-readable storage medium, for example, the computer instructions may be transmitted from a network station, computer, server or data center to another network station, computer, server or data center in a wired (for example, coaxial cable, fiber, digital subscriber line (DSL)) or wireless (for example, infrared, radio, microwaves) way. The computer-readable storage medium may be any available medium readable by a computer or may be a data storage device containing a server, a data center or the like integrated by one or more available mediums. The available medium may be a magnetic medium (for example, a floppy disk, a hard disk, and a magnetic tape), an optical medium (for example, a digital video disk (DVD)), a semiconductor medium (for example a solid state disk (SSD), or the like.

Stated above is merely detailed description of the disclosure, but the scope of protection of the disclosure is not limited thereto. Any modification or replacement that are easily conceivable by those familiar with the related art within the technical range disclosed by the disclosure shall fall within the scope of protection of the disclosure. Therefore, the scope of protection of the disclosure should be subjected to the claimed scope of the claims.

## Claims

1. A communication method, comprising:
sending, by a first network entity, first information to a second network entity, wherein the first information is configured to request the second network entity to determine jitter information corresponding to a target traffic flow.

2. The method of claim 1, wherein the first information comprises at least one of:
a jitter information acquisition instruction,
periodicity information of the target traffic flow, and
flow description information of the target traffic flow.

3. The method of claim 1 or 2, before sending, by the first network entity, the first information to the second network entity, the method further comprising:
receiving, by the first network entity, second information from a third network entity, wherein the second information is configured to trigger the first network entity to send the first information.

4. The method of claim 3, wherein the second information comprises at least one of:
a jitter information acquisition instruction,
periodicity information of the target traffic flow, and
flow description information of the target traffic flow.

5. The method of claim 3 or 4, wherein the third network entity is an application function (AF), and receiving, by the first network entity, the second information from the third network entity comprises:
receiving, by the first network entity, the second information that is transmitted through a policy control function (PCF) from the third network entity.

6. The method of claim 3 or 4, wherein the third network entity is an access network device, and receiving, by the first network entity, the second information from the third network entity comprises:
receiving, by the first network entity, the second information that is transmitted through an access and mobility management function (AMF) from the third network entity.

7. The method of any one of claims 1 to 6, further comprising:
receiving, by the first network entity, third information from the second network entity, wherein the third information comprises the jitter information corresponding to the target traffic flow.

8. The method of claim 7, wherein the third information further comprises at least one of:
periodicity information of the target traffic flow, and
flow description information of the target traffic flow.

9. The method of claim 7 or 8, further comprising:
sending, by the first network entity, fourth information to a fourth network entity, wherein the fourth information comprises the jitter information corresponding to the target traffic flow.

10. The method of claim 9, wherein the fourth network entity is an access network device, and sending, by the first network entity, the fourth information to the fourth network entity comprises:
sending, by the first network entity, the fourth information to the fourth network entity through an access and mobility management function (AMF).

11. The method of claim 6 or 10, wherein the access network device is a radio access network (RAN) or a next-generation radio access network (NG-RAN).

12. The method of any one of claims 9 to 11, wherein the fourth information further comprises at least one of:
periodicity information of the target traffic flow, and
flow description information of the target traffic flow.

13. The method of claim 2, 4, 8 or 12, wherein the periodicity information of the target traffic flow is a periodicity of data burst of the target traffic flow.

14. The method of claim 2, 4, 8 or 12, wherein the flow description information of the target traffic flow comprises at least one of:
packet filtering information of an Internet protocol (IP) quintuple,
an application identifier corresponding to the target traffic flow,
an identifier of target user equipment (UE) corresponding to the target traffic flow,
an address of the target UE, and
header information of a data packet corresponding to the target traffic flow.

15. The method of any one of claims 1 to 14, wherein the jitter information is N6 jitter information.

16. The method of claim 15, wherein the N6 jitter information is jitter information of the target traffic flow between a user plane function (UPF) and a data network (DN).

17. The method of any one of claims 1 to 16, wherein the jitter information comprises at least one of: a jitter range, a jigger average value, and a jitter variance.

18. The method of any one of claims 1 to 17, wherein the first network entity is a session management function (SMF), and the second network entity is a user plane function (UPF).

19. A communication method, comprising:
receiving, by a second network entity, first information from a first network entity, wherein the first information is configured to request the second network entity to determine jitter information corresponding to a target traffic flow; and
determining, by the second network entity, the jitter information corresponding to the target traffic flow based on the first information.

20. The method of claim 19, wherein the first information comprises at least one of:
a jitter information acquisition instruction,
periodicity information of the target traffic flow, and
flow description information of the target traffic flow.

21. The method of claim 19 or 20, further comprising:
sending, by the second network entity, third information to the first network entity, wherein the third information comprises the jitter information corresponding to the target traffic flow.

22. The method of claim 21, wherein the third information further comprises at least one of:
periodicity information of the target traffic flow, and
flow description information of the target traffic flow.

23. The method of claim 19 or 20, further comprising:
sending, by the second network entity, fifth information to a fourth network entity, wherein the fifth information comprises the jitter information corresponding to the target traffic flow.

24. The method of claim 23, wherein the fourth network entity is an access network device, and sending, by the second network entity, the fifth information to the fourth network entity comprises:
sending, by the second network entity, the fifth information to the fourth network entity through a user plane.

25. The method of claim 24, wherein the access network device is a radio access network (RAN) or a next-generation radio access network (NG-RAN).

26. The method of any one of claims 23 to 25, wherein the fifth information further comprises at least one of:
periodicity information of the target traffic flow, and
flow description information of the target traffic flow.

27. The method of claim 20, 22 or 26, wherein the periodicity information of the target traffic flow is a periodicity of data burst of the target traffic flow.

28. The method of claim 20, 22 or 26, wherein the flow description information of the target traffic flow comprises at least one of:
packet filtering information of an Internet protocol (IP) quintuple,
an application identifier corresponding to the target traffic flow,
an identifier of target user equipment (UE) corresponding to the target traffic flow,
an address of the target UE, and
header information of a data packet corresponding to the target traffic flow.

29. The method of any one of claims 19 to 28, wherein the jitter information is N6 jitter information.

30. The method of claim 29, wherein the N6 jitter information is jitter information of the target traffic flow between a user plane function (UPF) and a data network (DN).

31. The method of any one of claims 19 to 30, wherein the jitter information comprises at least one of: a jitter range, a jigger average value, and a jitter variance.

32. The method of any one of claims 19 to 31, wherein the first network entity is a session management function (SMF), and the second network entity is a user plane function (UPF).

33. A communication method, comprising:
sending, by a third network entity, second information to a first network entity, wherein the second information is configured to trigger the first network entity to send first information to a second network entity, and the first information is configured to request the second network entity to determine jitter information corresponding to a target traffic flow.

34. The method of claim 33, wherein the second information comprises at least one of:
a jitter information acquisition instruction,
periodicity information of the target traffic flow, and
flow description information of the target traffic flow.

35. The method of claim 34, wherein the periodicity information of the target traffic flow is a periodicity of data burst of the target traffic flow.

36. The method of claim 34, wherein the flow description information of the target traffic flow comprises at least one of:
packet filtering information of an Internet protocol (IP) quintuple,
an application identifier corresponding to the target traffic flow,
an identifier of target user equipment (UE) corresponding to the target traffic flow,
an address of the target UE, and
header information of a data packet corresponding to the target traffic flow.

37. The method of any one of claims 33 to 36, wherein the third network entity is an application function (AF), and sending, by the third network entity, the second information to the first network entity comprises:
sending, by the third network entity, the second information to the first network entity through a policy control function (PCF).

38. The method of any one of claims 33 to 36, wherein the third network entity is an access network device, and sending, by the third network entity, the second information to the first network entity comprises:
sending, by the third network entity, the second information to the first network entity through an access and mobility management function (AMF).

39. The method of claim 38, wherein the access network device is a radio access network (RAN) or a next-generation radio access network (NG-RAN).

40. The method of any one of claims 33 to 39, wherein the first network entity is a session management function (SMF), and the second network entity is a user plane function (UPF).

41. A communication method, comprising:
receiving, by a fourth network entity, jitter information corresponding to a target traffic flow from a first network entity or a second network entity.

42. The method of claim 41, wherein receiving, by the fourth network entity, the jitter information corresponding to the target traffic flow from the first network entity or the second network entity comprises:
receiving, by the fourth network entity, fourth information that is transmitted through an access and mobility management function (AMF) from the first network entity, wherein the fourth information comprises the jitter information corresponding to the target traffic flow.

43. The method of claim 42, wherein the fourth information further comprises at least one of:
periodicity information of the target traffic flow, and
flow description information of the target traffic flow.

44. The method of any one of claims 41 to 43, wherein receiving, by the fourth network entity, the jitter information corresponding to the target traffic flow from the first network entity or the second network entity comprises:
receiving, by the fourth network entity, fifth information that is transmitted through a user plane from the second network entity, wherein the fifth information comprises the jitter information corresponding to the target traffic flow.

45. The method of claim 44, wherein the fifth information further comprises at least one of:
periodicity information of the target traffic flow, and
flow description information of the target traffic flow.

46. The method of claim 43 or 45, wherein the periodicity information of the target traffic flow is a periodicity of data burst of the target traffic flow.

47. The method of claim 43 or 45, wherein the flow description information of the target traffic flow comprises at least one of:
packet filtering information of an Internet protocol (IP) quintuple,
an application identifier corresponding to the target traffic flow,
an identifier of target user equipment (UE) corresponding to the target traffic flow,
an address of the target UE, and
header information of a data packet corresponding to the target traffic flow.

48. The method of any one of claims 41 to 47, wherein the jitter information is N6 jitter information.

49. The method of claim 48, wherein the N6 jitter information is jitter information of the target traffic flow between a user plane function (UPF) and a data network (DN).

50. The method of any one of claims 41 to 49, wherein the jitter information comprises at least one of: a jitter range, a jigger average value, and a jitter variance.

51. The method of any one of claims 41 to 50, wherein the first network entity is a session management function (SMF), the second network entity is a user plane function (UPF), and the fourth network entity is a radio access network (RAN) or a next-generation radio access network (NG-RAN).

52. A communication apparatus, comprising:
a sending unit, configured to send first information to a second network entity, wherein the first information is configured to request the second network entity to determine jitter information corresponding to a target traffic flow.

53. The apparatus of claim 52, wherein the first information comprises at least one of:
a jitter information acquisition instruction,
periodicity information of the target traffic flow, and
flow description information of the target traffic flow.

54. The apparatus of claim 52 or 53, further comprising a receiving unit, wherein before sending the first information to the second network entity, the receiving unit is configured to: receive second information from a third network entity, wherein the second information is configured to trigger the apparatus to send the first information.

55. The apparatus of claim 54, wherein the second information comprises at least one of:
a jitter information acquisition instruction,
periodicity information of the target traffic flow, and
flow description information of the target traffic flow.

56. The apparatus of claim 54 or 55, wherein the third network entity is an application function (AF), and the receiving unit is specifically configured to: receive the second information that is transmitted through a policy control function (PCF) from the third network entity.

57. The apparatus of claim 54 or 55, wherein the third network entity is an access network device, and the receiving unit is specifically configured to: receive the second information that is transmitted through an access and mobility management function (AMF) from the third network entity.

58. The apparatus of any one of claims 52 to 57, further comprising a receiving unit, configured to: receive third information from the second network entity, wherein the third information comprises the jitter information corresponding to the target traffic flow.

59. The apparatus of claim 58, wherein the third information further comprises at least one of:
periodicity information of the target traffic flow, and
flow description information of the target traffic flow.

60. The apparatus of claim 58 or 59, wherein the sending unit is further configured to: send fourth information to a fourth network entity, wherein the fourth information comprises the jitter information corresponding to the target traffic flow.

61. The apparatus of claim 60, wherein the fourth network entity is an access network device, and the sending unit is specifically configured to: send the fourth information to the fourth network entity through an access and mobility management function (AMF).

62. The apparatus of claim 57 or 61, wherein the access network device is a radio access network (RAN) or a next-generation radio access network (NG-RAN).

63. The apparatus of any one of claims 60 to 62, wherein the fourth information further comprises at least one of:
periodicity information of the target traffic flow, and
flow description information of the target traffic flow.

64. The apparatus of claim 53, 55, 59 or 61, wherein the periodicity information of the target traffic flow is a periodicity of data burst of the target traffic flow.

65. The apparatus of claim 53, 55, 59 or 61, wherein the flow description information comprises at least one of:
packet filtering information of an Internet protocol (IP) quintuple,
an application identifier corresponding to the target traffic flow,
an identifier of target user equipment (UE) corresponding to the target traffic flow,
an address of the target UE, and
header information of a data packet corresponding to the target traffic flow.

66. The apparatus of any one of claims 52 to 65, wherein the jitter information is N6 jitter information.

67. The apparatus of claim 66, wherein the N6 jitter information is jitter information of the target traffic flow between a user plane function (UPF) and a data network (DN).

68. The apparatus of any one of claims 52 to 67, wherein the jitter information comprises at least one of: a jitter range, a jigger average value, and a jitter variance.

69. The apparatus of any one of claims 52 to 68, wherein the apparatus is a session management function (SMF), and the second network entity is a user plane function (UPF).

70. A communication apparatus, comprising:
a receiving unit, configured to: receive first information from a first network entity, wherein the first information is configured to request the apparatus to determine jitter information corresponding to a target traffic flow; and
a Determining, configured to determine the jitter information corresponding to the target traffic flow based on the first information.

71. The apparatus of claim 70, wherein the first information comprises at least one of:
a jitter information acquisition instruction,
periodicity information of the target traffic flow, and
flow description information of the target traffic flow.

72. The apparatus of claim 70 or 71, further comprising a sending unit, configured to: send third information to the first network entity, wherein the third information comprises the jitter information corresponding to the target traffic flow.

73. The apparatus of claim 72, wherein the third information further comprises at least one of:
periodicity information of the target traffic flow, and
flow description information of the target traffic flow.

74. The apparatus of claim 70 or 71, further comprising a sending unit, configured to: send fifth information to a fourth network entity, wherein the fifth information comprises the jitter information corresponding to the target traffic flow.

75. The apparatus of claim 74, wherein the fourth network entity is an access network device, and the sending unit is specifically configured to: send the fifth information to the fourth network entity through a user plane.

76. The apparatus of claim 75, wherein the access network device is a radio access network (RAN) or a next-generation radio access network (NG-RAN).

77. The apparatus of any one of claims 74 to 76, wherein the fifth information further comprises least one of:
periodicity information of the target traffic flow, or
flow description information of the target traffic flow.

78. The apparatus of claim 71, 73 or 77, wherein the periodicity information of the target traffic flow is a periodicity of data burst of the target traffic flow.

79. The apparatus of claim 71, 73 or 77, wherein the flow description information comprises at least one of:
packet filtering information of an Internet protocol (IP) quintuple,
an application identifier corresponding to the target traffic flow,
an identifier of target user equipment (UE) corresponding to the target traffic flow,
an address of the target UE, and
header information of a data packet corresponding to the target traffic flow.

80. The apparatus of any one of claims 70 to 79, wherein the jitter information is N6 jitter information.

81. The apparatus of claim 80, wherein the N6 jitter information is jitter information of the target traffic flow between a user plane function (UPF) and a data network (DN).

82. The apparatus of any one of claims 70 to 81, wherein the jitter information comprises at least one of: a jitter range, a jigger average value, and a jitter variance.

83. The apparatus of any one of claims 70 to 82, wherein the first network entity is a session management function (SMF), and the apparatus is a user plane function (UPF).

84. A communication apparatus, comprising:
a sending unit, configured to send second information to a first network entity, wherein the second information is configured to trigger the first network entity to send first information to a second network entity, and the first information is configured to request the second network entity to determine jitter information corresponding to a target traffic flow.

85. The apparatus of claim 84, wherein the second information comprises at least one of:
a jitter information acquisition instruction,
periodicity information of the target traffic flow, and
flow description information of the target traffic flow.

86. The apparatus of claim 85, wherein the periodicity information of the target traffic flow is a periodicity of data burst of the target traffic flow.

87. The apparatus of claim 85, wherein the flow description information of the target traffic flow comprises at least one of:
packet filtering information of an Internet protocol (IP) quintuple,
an application identifier corresponding to the target traffic flow,
an identifier of target user equipment (UE) corresponding to the target traffic flow,
an address of the target UE, and
header information of a data packet corresponding to the target traffic flow.

88. The apparatus of any one of claims 84 to 87, wherein the apparatus is an application function (AF), and the sending unit is specifically configured to: send the second information to the first network entity through a policy control function (PCF).

89. The apparatus of any one of claims 84 to 87, wherein the apparatus is an access network device, and the sending unit is specifically configured to: send the second information to the first network entity through an access and mobility management function (AMF).

90. The apparatus of claim 89, wherein the access network device is a radio access network (RAN) or a next-generation radio access network (NG-RAN).

91. The apparatus of any one of claims 84 to 90, wherein the first network entity is a session management function (SMF), and the second network entity is a user plane function (UPF).

92. A communication apparatus, comprising:
a receiving unit, configured to receive jitter information corresponding to a target traffic flow from a first network entity or a second network entity.

93. The apparatus of claim 92, wherein the receiving unit is specifically configured to: receive fourth information that is transmitted through an access and mobility management function (AMF) from the first network entity, wherein the fourth information comprises the jitter information corresponding to the target traffic flow.

94. The apparatus of claim 93, wherein the fourth information further comprises at least one of:
periodicity information of the target traffic flow, and
flow description information of the target traffic flow.

95. The apparatus of any one of claims 92 to 94, wherein the receiving unit is specifically configured to: receive fifth information that is transmitted through a user plane from the second network entity, wherein the fifth information comprises the jitter information corresponding to the target traffic flow.

96. The apparatus of claim 95, wherein the fifth information further comprises at least one of:
periodicity information of the target traffic flow, and
flow description information of the target traffic flow.

97. The apparatus of claim 94 or 96, wherein the periodicity information of the target traffic flow is a periodicity of data burst of the target traffic flow.

98. The apparatus of claim 94 or 96, wherein the flow description information of the target traffic flow comprises at least one of:
packet filtering information of an Internet protocol (IP) quintuple,
an application identifier corresponding to the target traffic flow,
an identifier of target user equipment (UE) corresponding to the target traffic flow,
an address of the target UE, and
header information of a data packet corresponding to the target traffic flow.

99. The apparatus of any one of claims 92 to 98, wherein the jitter information is N6 jitter information.

100. The apparatus of claim 99, wherein the N6 jitter information is jitter information of the target traffic flow between a user plane function (UPF) and a data network (DN).

101. The apparatus of any one of claims 92 to 100, wherein the jitter information comprises at least one of: a jitter range, a jigger average value, and a jitter variance.

102. The apparatus of any one of claims 92 to 101, wherein the first network entity is a session management function (SMF), the second network entity is a user plane function (UPF), and the apparatus is a radio access network (RAN) or a next-generation radio access network (NG-RAN).

103. A communication device, comprising a memory, a transceiver and a processor,
wherein the memory is configured to store a program, and
the processor is configured to transmit and receive data through the transceiver, and the processor is configured to call the program from the memory to enable the communication device to perform the method of any one of claims 1 to 51.

104. A chip, comprising a processor configured to call a program from a memory to enable a device installed with the chip to perform the method of any one of claims 1 to 51.

105. A computer-readable storage medium having stored thereon a program that enables a computer to execute the method of any one of claims 1 to 51.

106. A computer program product comprising a program that enables a computer to execute the method of any one of claims 1 to 51.

107. A computer program enabling a computer to execute the method of any one of claims 1 to 51.
